# EUROPÄISCHE PATENTSCHRIFT

(11) **EP 3 545 141 B1**
(45) Veröffentlichungstag und Bekanntmachung des Hinweises auf die Patenterteilung: **22.04.2020**
(21) Anmeldenummer: 18704400.3
(22) Anmeldetag: 09.01.2018
(51) Int. Cl.: E03C 1/084, F16K 17/34, G05D 7/01, E03C 1/02

(54) **SANITÄRES EINSETZTEIL UND VERWENDUNG EINES SOLCHEN**
SANITARY INSERT PART AND USE OF SUCH AN INSERT PART
INSERT SANITAIRE ET SON UTILISATION

(30) Priorität: 10.03.2017 DE 202017101398 U
(43) Veröffentlichungstag der Anmeldung: 02.10.2019
(73) Patentinhaber: Neoperl GmbH, 79379 Müllheim (DE)
(72) Erfinder: TEMPEL, Marc, 79111 Freiburg (DE)
(74) Vertreter: Mertzlufft-Paufler, Cornelius
(86) Internationale Anmeldenummer: PCT/EP2018/050422
(87) Internationale Veröffentlichungsnummer: WO 2018/162121

(56) Entgegenhaltungen:
- DE-A1- 10 311 501
- DE-A1-102015 003 065
- FR-A1- 2 929 629

## Beschreibung

Die Erfindung betrifft ein sanitäres Einsetzteil, mit einem Grundkörper, der eine radial orientierte Außenfläche bereitstellt, und einem elastischen Regelkörper, wobei der Grundkörper einen Reglerkern mit einem Regelprofil bildet und zwischen dem Regelkörper und dem Regelprofil ein Regelspalt ausgebildet ist, so dass ein Öffnungsquerschnitt des Regelspaltes durch eine druckabhängige Beaufschlagung des Regelkörpers veränderlich ist.

Die Erfindung betrifft weiter eine Verwendung eines sanitären Einsetzteils.

Derartige Einsetzteile sind bekannt und werden beispielsweise als Durchflussmengenregler eingesetzt, um in einem Arbeitsbereich druckunabhängig eine gewünschte Durchflussmenge pro Zeiteinheit zu realisieren.

Die DE 103 11 501 A1 betrifft ein Einbauteil, das als Rückflussverhinderer ausgebildet und in eine Gas- oder Flüssigkeitsleitung einsetzbar ist, mit einem Gehäuse, in dessen Gehäuseinneren zumindest ein Schließkörper beweglich angeordnet ist, der in Schließstellung eine Durchtrittsöffnung oder mehrere Durchtrittsöffnungen von Zuströmkanälen abdichtet. Das Gehäuse ist aus zumindest zwei Gehäuseteilen zusammengesetzt und weist in einem Ringbereich die Zuströmkanäle auf, die in eine Gehäusekammer münden. Zwischen einander zugewandten Seiten zweier benachbarter Gehäuseteile ist eine Gehäuseteiledichtung vorgesehen, die einstückig mit zumindest einer innerhalb der Gehäusekammer vom Fördermedium bewegbaren Ringmembrane verbunden ist, die den Schließkörper bildet.

Die DE 10 2015 003 065 A1 betrifft ein sanitäres Einsetzteil, das mit einem hülsenförmigen Einsetzzapfen in eine stirnseitige Einsetzöffnung eines sanitären Leitungsabschnittes einsetzbar ist, welcher Einsetzzapfen zur reibschlüssigen Befestigung in der Einsetzöffnung zumindest außenumfangsseitig eine Mantellage aus elastischem Material aufweist.

Aus der FR 2 929 629 A1 ist ein Durchflussmengenregler mit einem zweiteiligen Gehäuse und einem zwischen den Gehäuseteilen angeordneten ringförmigen Regelkörper bekannt.

Der Erfindung liegt die Aufgabe zugrunde, einen Durchflussmengenregler mit möglichst kleinem Außenmaß zu schaffen.

Erfindungsgemäß wird diese Aufgabe durch die Merkmale des Anspruchs 1 gelöst. Insbesondere wird somit erfindungsgemäß zur Lösung der genannten Aufgabe bei einem Durchflussmengenregler der eingangs beschriebenen Art vorgeschlagen, dass der Grundkörper eine radial nach außen offene Aufnahme bildet, dass der Regelkörper in der Aufnahme angeordnet ist und dass ein Außendurchmesser des Regelkörpers auf einen Außendurchmesser der Außenfläche abgestimmt ist.

Somit ist außenseitig an dem Regelkörper keine Wandung erforderlich, und der hierfür benötigte Bauraum kann eingespart werden. Der erfindungsgemäße Durchflussmengenregler kann somit mit einer radialen Außenabmessung gefertigt werden, die im Wesentlichen durch den Regelkörper bestimmt ist. Dies vermeidet zusätzlich nachteilige Einflüsse auf ein Regelverhalten, die sich aus einer sonst erforderlichen Miniaturisierung des Regelkörpers ergeben würden.

Die erfindungsgemäße Ausgestaltung der Aufnahme ermöglicht somit, dass der Regelkörper in einer nicht eingebauten Situation des Einsetzteils radial von außen vorzugsweise allseitig zugänglich ist.

Die Begriffe "radial", "axial", "Umfang" können - soweit nichts anderes angegeben ist - auf eine Längsachse des Durchflussmengenreglers, die mit einer allgemeinen Strömungsrichtung zusammenfallen kann, verstanden werden.

Bei einer Ausgestaltung der Erfindung kann vorgesehen sein, dass der Außendurchmesser des Regelkörpers kleiner als der Außendurchmesser der Außenfläche ist. Hierbei ist es günstig, wenn der Regelkörper einen im Wesentlichen zum Außendurchmesser der Außenfläche gleichen Außendurchmesser aufweist, jedoch nicht über die Außenfläche übersteht. Bevorzugt ist der Außendurchmesser des Regelkörpers höchstens 20% kleiner, besonders bevorzugt höchstens 10% kleiner als der Außendurchmesser der Außenfläche. Somit ist ein verfügbarer Bauraum für einen möglichst großen Regelkörper nutzbar.

Bei einer Ausgestaltung der Erfindung kann vorgesehen sein, dass die Aufnahme in einem von dem Regelkörper eingenommenen Axialabschnitt radial nach außen offen ausgebildet ist. Somit ist eine Anordnung geschaffen, bei welcher keine Bauteile zwischen dem Regelkörper und einer den Durchflussmengenregler umgebenden oder aufnehmenden Innenwand eines rohrförmigen Abschnitts vorgesehen sind. Der Durchflussmengenregler kann somit so nah wie möglich an dieser Innenwand angeordnet werden. Somit ist eine Platzausnutzung eines verfügbaren Innenquerschnitts durch den Regelkörper verbesserbar.

Bei einer Ausgestaltung der Erfindung kann vorgesehen sein, dass die Außenfläche an einer Wandung des Grundkörpers ausgebildet ist, wobei der Außendurchmesser des Regelkörpers größer als ein Innendurchmesser der Wandung ist. Somit ist erreichbar, dass ein radial äußerster Punkt des Regelkörpers über eine innere Begrenzung der Wandung hinausragt. Für eine Dimensionierung des Regelkörpers ist somit auch eine Wandstärke der Wandung nutzbar, so dass ein möglichst großer Krümmungsradius des Regelkörpers in Umfangsrichtung erreichbar ist. Hieraus ergibt sich ein besonders vorteilhaftes Regelverhalten.

Bei einer Ausgestaltung der Erfindung kann vorgesehen sein, dass der Außendurchmesser der Außenfläche eine maximale radiale Außenabmessung des Grundkörpers definiert. Von Vorteil ist dabei, dass im Inneren des aufnehmenden rohrförmigen Abschnitts kein Platz verschenkt wird. Vielmehr ist der gesamte verfügbare Innenquerschnitt des Abschnitts nutzbar, um einen möglichst großen Regelkörper, das heißt einen Regelkörper mit beispielsweise möglichst großem Außendurchmesser, einsetzen zu können.

Die Außenfläche kann hierbei zylindrisch oder auf andere Weise, beispielsweise als Freiform, ausgebildet sein. Der Außendurchmesser kann hierbei durch die am weitesten radial außen liegenden Bereiche definiert sein.

Bei einer Ausgestaltung der Erfindung kann vorgesehen sein, dass benachbart zu der Außenfläche ein radial nach innen deformierbares Dichtelement ausgebildet ist. Somit ist/sind eine Abdichtung und/oder ein axiales Halten in einem rohrförmigen Abschnitt konstruktiv und fertigungstechnisch einfach erreichbar. Vorzugsweise ist das Dichtelement wenigstens bis auf den Außendurchmesser der Außenfläche verformbar. Unnötige Freiräume zwischen der Außenfläche und dem rohrförmigen Abschnitt sind so vermeidbar. Die elastische Verformbarkeit hat den weiteren Vorteil, dass Fertigungstoleranzen oder Durchmesserschwankungen des rohrförmigen Abschnitts ausgleichbar sind. Besonders günstig ist es, wenn das Dichtelement als angeformte, vorzugsweise umlaufende, Dichtlippe ausgebildet ist. Somit ist das Dichtelement leicht einstückig mit dem Gehäuse ausbildbar und kann bevorzugt allseitige Dichtfunktionen und/oder Haltefunktionen übernehmen.

Bei einer Ausgestaltung der Erfindung kann vorgesehen sein, dass Querschnitt des Grundkörpers eine runde Grundform aufweist. Somit ist der Durchflussmengenregler beispielsweise in standardisierte Wasserausläufe und/oder Rohrsystems ohne zusätzliche Anpassungsmaßnahmen einsetzbar.

Bei einer Ausgestaltung der Erfindung kann vorgesehen sein, dass der Regelkörper ringförmig ausgebildet ist. Somit sind Enden an dem Regekörper, die möglicherweise fixiert werden müssten, verzichtbar. Bevorzugt ist der Regelkörper als O-Ring ausgebildet. Somit ist ein verfügbares Standardbauteil verwendbar.

Bei einer Ausgestaltung der Erfindung kann vorgesehen sein, dass der Grundkörper aus mindestens zwei Teilen zusammengesetzt ist, insbesondere wobei die mindestens zwei Teile miteinander form-, kraft- und/oder stoffschlüssig und/oder nicht zerstörungsfrei lösbar verbunden sind. Somit ist der Regelkörper, insbesondere wenn er ringförmig ist, einfach zwischen die Teile einlegbar und dort in seiner Gebrauchsstellung gehalten.

Alternativ oder zusätzlich kann vorgesehen sein, dass der Grundkörper einstückig ausgebildet ist. Somit ist eine Montage vereinfachbar. Insbesondere kann hierbei die Aufnahme zumindest teilweise axial einseitig offen ausgebildet sein. Somit ist der bereits beschriebene Regelkörper einfach in die Aufnahme einlegbar. Hierbei kann der eingesetzte Regelkörper axial durch ein Halteelement gesichert sein. Es ist somit ein Herausfallschutz bildbar, der die Montage des Einsetzteils am Einsatzort vereinfacht.

Bei einer Ausgestaltung der Erfindung kann vorgesehen sein, dass ein Verbindungsabschnitt zwischen den mindestens zwei Teilen den Regelkörper durchgreift. Somit ist der Regelkörper einfach in radialer Richtung haltbar.

Bei einer Ausgestaltung der Erfindung kann vorgesehen sein, dass die mindestens zwei Teile mit ihren Außenabmessungen einen gemeinsamen Zylindermantel beschreiben. Somit ist ein gleichbleibender Innendurchmesser eines rohrförmigen Abschnitts gut ausnutzbar.

Bei einer Ausgestaltung der Erfindung kann vorgesehen sein, dass an einer Abströmseite eine zumindest teilweise axial wirkende Dichtfläche ausgebildet ist. Von Vorteil ist dabei, dass ein Flüssigkeitsaustritt durch die Aufnahme und ein Umgehen der Mengenreglung einfach vermeidbar sind. Bevorzugt ist die Dichtfläche vollständig radial ausgerichtet, weist also beispielsweise eine Flächennormale auf, die parallel zur Längsachse des Einsetzteils und/oder zur Einsetzrichtung des Einsetzteils ausgerichtet ist. Somit ist die Dichtfläche beispielsweise als Kreisscheibe ausbildbar, durch deren Öffnung welche das mengengeregelte Wasser strömt. Es sind aber auch konische Dichtflächen oder allgemein eine Verjüngung beschreibende Dichtflächen ausbildbar, bei denen nur ein Teil, also eine Komponente, eine Anpresskraft axial ausgerichtet ist.

Bei einer Ausgestaltung der Erfindung kann vorgesehen sein, dass ein Außendurchmesser der Außenfläche, insbesondere der bereits erwähnte Außendurchmesser, höchstens 8mm beträgt. Somit sind sehr kleine Durchflussmengenregler fertigbar, die ein gutes Regelverhalten zeigen. Besonders günstig ist es, wenn der Außendurchmesser höchstens 6mm beträgt. Somit sind besonders kleine Einbaumaße erreichbar.

Die gestellte Aufgabe wird erfindungsgemäß alternativ oder zusätzlich durch die Merkmale des nebengeordneten, auf eine Verwendung gerichteten Anspruchs gelöst. Insbesondere wird somit zur Lösung der genannten Aufgabe eine Verwendung eines erfindungsgemäßen sanitären Einsetzteils, insbesondere wie zuvor beschrieben und/oder nach einem der auf ein Einsetzteil gerichteten Ansprüche, vorgeschlagen, wobei das Einsetzteil in einen rohrförmigen Abschnitt eingesetzt wird, wobei eine Innenwand des rohrförmigen Abschluss als radial äußerer Abschluss der Aufnahme des Regelkörpers dient. Somit wird in der Einbausituation die Aufnahme, in der der Regelkörper angeordnet ist, radial außenseitig durch den aufnehmenden rohrförmigen Abschnitt abgeschlossen. Ein zusätzlicher Bauraum für einen radialen Abschluss um den Regelkörper durch ein Gehäuse des Einsetzteils, welcher das Einsetzteil radial vergrößern oder eine unvorteilhafte Verkleinerung des Regelkörpers erfordern würde, ist somit vermeidbar. Der aufnehmende rohrförmige Abschnitt kann somit eine gehäusebildende Funktion zum Abschluss des Regelkörpers übernehmen.

Bei einer Ausgestaltung der Erfindung kann vorgesehen sein, dass eine zumindest teilweise axial wirkende Dichtfläche, insbesondere die bereits erwähnte Dichtfläche, zwischen dem Einsetzteil und dem rohrförmigen Abschnitt abströmseitig zu der Aufnahme abdichtet. Von Vorteil ist dabei, dass ein außenseitiges Vorbeiströmen an dem Regelspalt, welches das Regelverhalten ungünstig beeinträchtigen würde, vermeidbar ist. Insbesondere kann hierbei vorgesehen sein, dass die Dichtfläche an einem radial nach innen abstehenden Kragen an dem rohrförmigen Abschnitt anliegt. Der rohrförmige Abschnitt kann somit mit einem Kragen versehen sein, welcher das Einsetzteil auch bei hohen Drücken an seinem Platz im Abschnitt hält. Es ist somit eine selbsttätige Verstärkung der Abdichtung an der Dichtfläche erreichbar.

Die Erfindung wird nun anhand eines Ausführungsbeispiels näher beschrieben, ist aber nicht auf das Ausführungsbeispiel beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigt:
- Fig. 1: ein erfindungsgemäßes sanitäres Einsetzteil in einer dreidimensionalen Schrägansicht von außen,
- Fig. 2: das Einsetzteil nach Figur 1 in einer Draufsicht auf eine Zuströmseite,
- Fig. 3: das Einsetzteil nach den Figuren 1 und 2 in einem Längsschnitt,
- Fig. 4: das Einsetzteil nach den Figuren 1 bis 3 in Explosionsdarstellung,
- Fig. 5: eine Einbausituation des Einsetzteils nach den Figuren 1 bis 4 in einem rohrförmigen Abschnitt zur Erläuterung einer erfindungsgemäßen Verwendung,
- Fig. 6: drei Ansichten eines weiteren erfindungsgemäßen Einsetzteils und
- Fig. 7: drei Ansichten eines weiteren erfindungsgemäßen Einsetzteils.

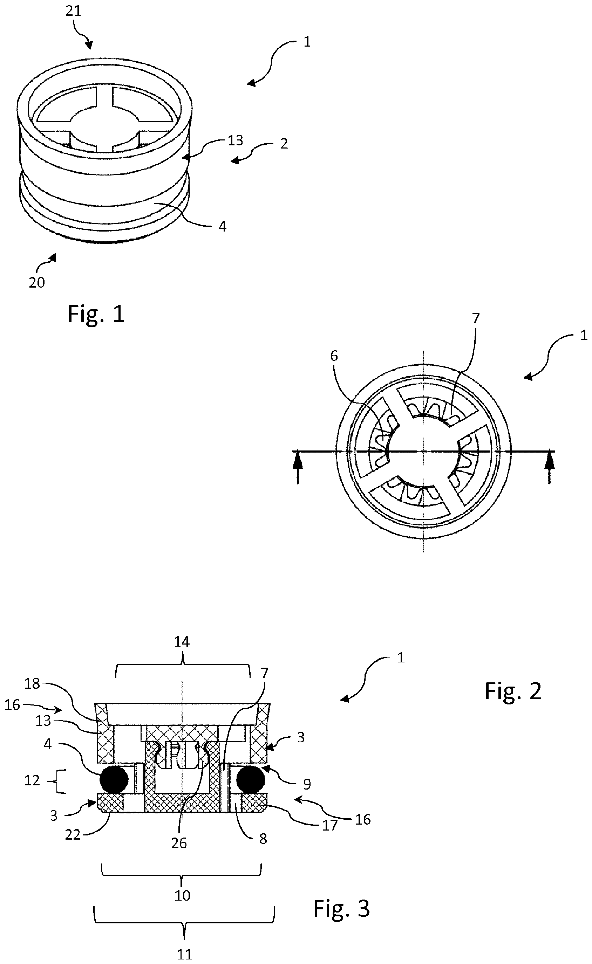

Die Fig. 1 bis 4 zeigen ein erfindungsgemäßes sanitäres Einsetzteil 1 in verschiedenen Darstellungen. Das Einsetzteil 1 weist einen im Wesentlichen zylinderförmigen Grundkörper 2 auf, der eine radial orientierte Außenfläche 3 aufweist. Der Grundkörper 2 weist weiterhin eine umlaufende Aufnahme 9 auf, in die ein etwa O-Ring-förmiger Regelkörper 4 eingesetzt ist. Die Aufnahme 9 ist zumindest in einem von dem Regelkörper 4 eingenommenen Axialabschnitt 12 radial nach außen offen ausgebildet.

Dabei ist der Außendurchmesser 10 des Regelkörpers 4 auf den Außendurchmesser 11 der Außenfläche 3 abgestimmt. Das bedeutet, dass der Außendurchmesser 10 des Regelkörpers 4 vorzugsweise kleiner als der Außendurchmesser 11 der Außenfläche ist. Insbesondere höchstens 20%, vorzugsweise höchstens 10% kleiner, also möglichst nahe an, jedoch unterhalb von, dem Außendurchmesser des Regelkörpers 2.

Das Einsetzteil 1 weist eine Zuströmseite 21, durch die Wasser in das Einsetzteil 1 einfließt, und eine Abströmseite 20, durch die Wasser wieder austritt, auf.

Wie insbesondere in Fig. 3 zu sehen ist, weist der Grundkörper 2 einen Reglerkern 5 auf, der koaxial im Zentrum des Grundkörpers 2 angeordnet ist. Der Reglerkern 5 weist radial außen ein Reglerprofil 6 auf, das zusammen mit dem koaxial zu diesem Reglerprofil 6 angeordneten Regelkörper 4 einen Regelspalt 7 definiert.

Der Regelkörper 4 besteht aus einem elastischen Material, so dass der Öffnungsquerschnitt 8 des Regelspaltes 7 durch eine druckabhängige Beaufschlagung des Regelkörpers 4 veränderlich ist.

Der Grundkörper 2 ist im Beispiel zweiteilig ausgebildet, so dass eine Montage einfacher erfolgen kann. Insbesondere können die beiden Teile form-, kraft- und/oder stoffschlüssig, also allgemein nicht zerstörungsfrei lösbar verbunden sein. Somit ist der Regelkörper 4, insbesondere wenn er ringförmig ist, einfach zwischen die Teile einlegbar und dort in seiner Gebrauchsstellung gehalten. Ein erstes Teil 17 ist im Beispiel mit einem zweiten Teil 18 über einen Verbindungsabschnitt 19 verbunden, der den Reglerkörper 5 axial durchgreift. Hier weist das zweite Teil 18 Rastelemente 26 auf, die in den ersten Teil 17 eingreifen und somit eine lösbare Verbindung schaffen. Die Rastelemente 26 können alternativ oder zusätzlich an dem ersten Teil 17 ausgebildet sein.

Die bereits beschriebene Außenfläche 3 kann hierbei an dem ersten Teil 17 und/oder dem zweiten Teil 18 ausgebildet sein. Im vorliegenden Ausführungsbeispiel fluchten die beiden Außenflächen 3 und bilden somit eine gemeinsame, zweiteilige Außenfläche 3 mit einer Form eines Zylindermantels

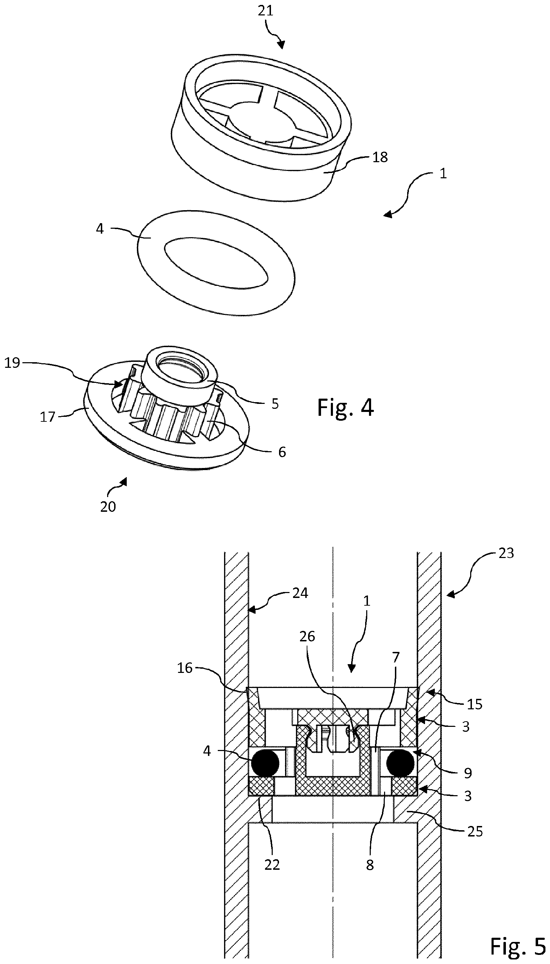

In Fig. 5 ist nun ein erfindungsgemäßes sanitäres Einsetzteil 1 in einem rohrförmigen Abschnitt 23 eingesetzt. Die Innenwand 24 des rohrförmigen Abschnitts 23 dient als radial äußerer Abschluss der Aufnahme 9 des Regelkörpers 4. Somit wird in der Einbausituation die Aufnahme 9, in der der Regelkörper 4 angeordnet ist, radial außenseitig durch den aufnehmenden rohrförmigen Abschnitt 23 abgeschlossen. Ein zusätzlicher Bauraum für einen radialen Abschluss um den Regelkörper 4 durch ein Gehäuse des Einsetzteils 1, welcher das Einsetzteil 1 radial vergrößern oder eine unvorteilhafte Verkleinerung des Regelkörpers 4 erfordern würde, ist somit vermeidbar. Der aufnehmende rohrförmige Abschnitt 23 übernimmt somit eine gehäusebildende Funktion zum Abschluss des Regelkörpers 4. In der Praxis ist der rohrförmige Abschnitt 23 beispielsweise ein Teil einer Sanitär-Armatur, eines Rohrsystems oder dergleichen.

Im Beispiel weist der rohrförmige Abschnitt 23 eine teilweise axial wirkende Dichtfläche 22 auf, die zwischen dem Einsetzteil 1 und dem rohrförmigen Abschnitt 23 abströmseitig zu der Aufnahme 9 abdichtet. Von Vorteil ist dabei, dass ein außenseitiges Vorbeiströmen an dem Regelspalt 7, welches das Regelverhalten ungünstig beeinträchtigen würde, vermeidbar ist. Insbesondere kann hierbei vorgesehen sein, dass die Dichtfläche 22 an einem radial nach innen abstehenden Kragen 25 an dem rohrförmigen Abschnitt 23 anliegt. Der Kragen 25 hält das Einsetzteil 1 auch bei hohen Drücken an seinem Platz im Abschnitt 23. Es ist somit eine selbsttätige Verstärkung der Abdichtung an der Dichtfläche 22 erreichbar.

An der Zuströmseite 21 weist das Einsetzteil 1 ein Dichtelement 15 auf, das das außenseitige Vorbeiströmen an dem Regelspalt 7 auch auf der Einströmseite 21 verhindert. Das Dichtelement 15 ist durch eine über die Au0enfläche 3 radial hervorstehende Dichtlippe 16 gebildet, die mit dem Innendurchmesser 14 des Abschnitts 23 zusammenwirkt.

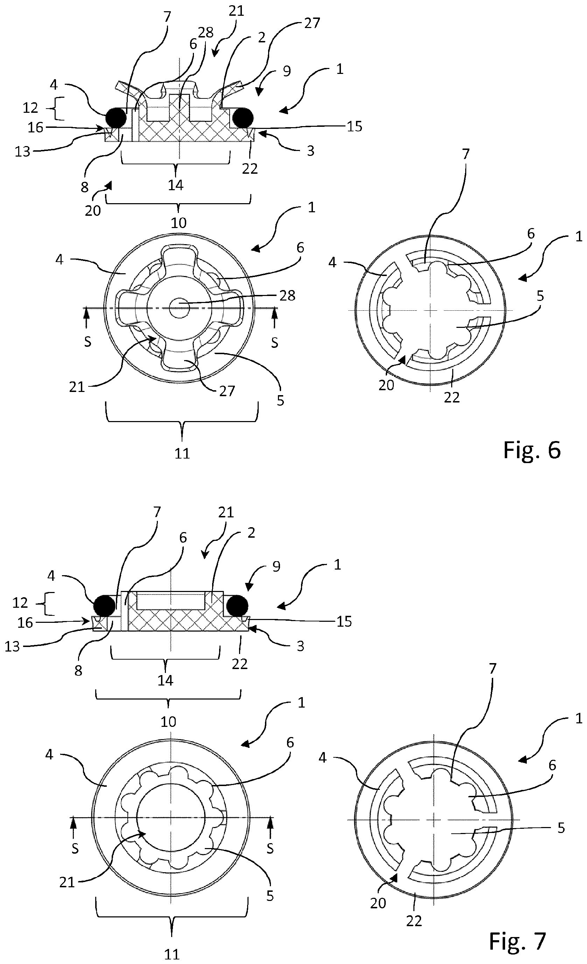

Figur 6 zeigt im Uhrzeigersinn rechts unten eine Ansicht von unten, also auf die Abströmseite 20, links unten eine Ansicht von oben, also auf die Zuströmseite 21, und links oben einen Axialschnitt entlang der Schnittebene S-S. Konstruktiv und/oder funktionell zu den vorangehenden Ausführungsbeispielen identische oder gleichartige Bauteile und Funktionseinheiten sind mit denselben Bezugszeichen bezeichnet und nicht noch einmal gesondert beschrieben. Die Ausführungen zu den Figuren 1 bis 5 gelten daher zu Figur 6 entsprechend. Insbesondere kann das Einsetzteil nach Figur 6 in den rohrförmigen Abschnitt 23 von Figur 5 gesetzt werden.

Das Ausführungsbeispiel nach Figur 6 unterscheidet sich von dem vorangehenden Ausführungsbeispiel zumindest dadurch, dass der Grundkörper 3 einteilig oder einstückig ausgebildet ist und dass die Aufnahme 9 in axialer Richtung einseitig, insbesondere entgegen einer Strömungsrichtung, teilweise offen ist.

Statt der Rastelemente 26 weist der Grundkörper 2 Halteelemente 27 auf, die - wie hier im Beispielzungenförmig sein können und die den Regelkörper 4 axial sichern, indem sie ihn beispielsweise - wie gezeigt - durch- und hintergreifen.
Das bereits zum vorangehenden Ausführungsbeispiel beschriebene Dichtelement 15 - auch hier beispielhaft als umlaufende Dichtlippe 16 ausgeführt - ist hier am abströmseitigen Ende des Grundkörpers 2, also in Strömungsrichtung hinter dem Regelkörper 4, angeordnet. Es dichtet ab und hält den Grundkörper 3 im rohrförmigen Abschnitt 23 sicher gegen ein Herausfallen entgegen der Strömungsrichtung. Über ein hier beispielhaft stiftförmiges Entnahmeelement 28 ist das Einsetzteil 1 mit einem Werkzeug, beispielsweise mit einer Zange, einsetzbar und/oder entnehmbar.

Die Außenfläche 3 ist somit als eine einfache, zusammenhängende Zylindermantelfläche unterhalb der Aufnahme 9 ausgebildet.

Figur 7 zeigt im Uhrzeigersinn rechts unten eine Ansicht von unten, also auf die Abströmseite 20, links unten eine Ansicht von oben, also auf die Zuströmseite 21, und links oben einen Axialschnitt entlang der Schnittebene S-S. Konstruktiv und/oder funktionell zu den vorangehenden Ausführungsbeispielen identische oder gleichartige Bauteile und Funktionseinheiten sind mit denselben Bezugszeichen bezeichnet und nicht noch einmal gesondert beschrieben. Die Ausführungen zu den Figuren 1 bis 6 gelten daher zu Figur 7 entsprechend. Insbesondere kann das Einsetzteil nach Figur 7 in den rohrförmigen Abschnitt 23 von Figur 5 gesetzt werden.

Auch bei diesem Ausführungsbeispiel ist der Grundkörper 3 einteilig oder einstückig ausgeführt. Die Aufnahme 9 ist hier nun vollständig in axialer Richtung einseitig offen ausgebildet, so dass der Regelkörper 4 einfach in die Aufnahme 9 eingesetzt werden kann.

Der Regelkörper 4 - und eventuell auch der Grundkörper 3 - ist/sind hierbei auf andere Weise axial gesichert, beispielsweise durch nicht weiter dargestellte Mittel im rohrförmigen Abschnitt 23 wie ein Sicherungsring, eine Sicherungsmutter, radiale Schrauben oder Stifte oder dergleichen.

### Bezugszeichenliste

- 1: sanitäres Einsetzteil
- 2: Grundkörper
- 3: Außenfläche
- 4: Regelkörper
- 5: Reglerkern
- 6: Regelprofil
- 7: Regelspalt
- 8: Öffnungsquerschnitt
- 9: Aufnahme
- 10: Außendurchmesser des Regelkörpers
- 11: Außendurchmesser der Außenfläche
- 12: Axialabschnitt
- 13: Wandung
- 14: Innendurchmesser
- 15: Dichtelement
- 16: Dichtlippe
- 17: erstes Teil
- 18: zweites Teil
- 19: Verbindungsabschnitt
- 20: Abströmseite
- 21: Zuströmseite
- 22: Dichtfläche
- 23: rohrförmiger Abschnitt
- 24: Innenwand
- 25: Kragen
- 26: Rastelement
- 27: Halteelement
- 28: Entnahmeelement

## Patentansprüche

1. Sanitäres Einsetzteil (1), mit einem Grundkörper (2), der eine radial orientierte Außenfläche (3) des sanitären Einsetzteils (1) bereitstellt, und einem elastischen Regelkörper (4), wobei der Grundkörper (2) einen Reglerkern (5) mit einem Regelprofil (6) bildet und zwischen dem Regelkörper (4) und dem Regelprofil (6) ein Regelspalt (7) ausgebildet ist, so dass ein Öffnungsquerschnitt (8) des Regelspaltes (7) durch eine druckabhängige Beaufschlagung des Regelkörpers (4) veränderlich ist, **dadurch gekennzeichnet, dass** der Grundkörper (2) eine radial nach außen offene Aufnahme (9) bildet, dass der Regelkörper (4) in der Aufnahme (9) angeordnet ist und dass ein Außendurchmesser (10) des Regelkörpers (2) auf einen Außendurchmesser (11) der Außenfläche (3) abgestimmt ist, dass benachbart zu der Außenfläche (3) ein radial nach innen deformierbares Dichtelement (15), ausgebildet ist.

2. Sanitäres Einsetzteil (1) nach Anspruch 1, **dadurch gekennzeichnet, dass** der Außendurchmesser (10) des Regelkörpers (4) kleiner, insbesondere höchstens 20%, vorzugsweise höchstens 10% kleiner, als der Außendurchmesser (11) der Außenfläche (3) ist.

3. Sanitäres Einsetzteil (1) nach einem der vorangehenden Ansprüche, **dadurch gekennzeichnet, dass** die Aufnahme (9) in einem von dem Regelkörper (4) eingenommenen Axialabschnitt (12) radial nach außen offen ausgebildet ist.

4. Sanitäres Einsetzteil (1) nach einem der vorangehenden Ansprüche, **dadurch gekennzeichnet, dass** die Außenfläche (3) an einer Wandung (13) des Grundkörpers (2) ausgebildet ist, wobei der Außendurchmesser (10) des Regelkörpers (4) größer als ein Innendurchmesser (14) der Wandung ist.

5. Sanitäres Einsetzteil (1) nach einem der vorangehenden Ansprüche, **dadurch gekennzeichnet, dass** der Außendurchmesser (11) der Außenfläche (3) eine maximale radiale Außenabmessung des Grundkörpers (2) definiert.

6. Sanitäres Einsetzteil (1) nach einem der vorangehenden Ansprüche, **dadurch gekennzeichnet, dass** benachbart zu der Außenfläche (3) ein radial nach innen, wenigstens bis auf den Außendurchmesser (11) der Außenfläche (3), deformierbares Dichtelement (15), insbesondere als angeformte Dichtlippe (16), ausgebildet ist.

7. Sanitäres Einsetzteil (1) nach einem der vorangehenden Ansprüche, **dadurch gekennzeichnet, dass** Querschnitt des Grundkörpers (2) eine runde Grundform aufweist.

8. Sanitäres Einsetzteil (1) nach einem der vorangehenden Ansprüche, **dadurch gekennzeichnet, dass** der Regelkörper (4) ringförmig, insbesondere als O-Ring, ausgebildet ist.

9. Sanitäres Einsetzteil (1) nach einem der vorangehenden Ansprüche, **dadurch gekennzeichnet, dass** der Grundkörper (2) aus mindestens zwei Teilen (17, 18) zusammengesetzt ist, insbesondere wobei die mindestens zwei Teile (17, 18) miteinander form-, kraft- und/oder stoffschlüssig und/oder nicht zerstörungsfrei lösbar verbunden sind, und/oder dass der Grundkörper (2) einstückig ausgebildet ist, insbesondere wobei die Aufnahme (9) zumindest teilweise axial einseitig offen ausgebildet ist..

10. Sanitäres Einsetzteil (1) nach Anspruch 9, **dadurch gekennzeichnet, dass** ein Verbindungsabschnitt (19) zwischen den mindestens zwei Teilen (17, 18) den Regelkörper (5) durchgreift.

11. Sanitäres Einsetzteil (1) nach Anspruch 9 oder 10, **dadurch gekennzeichnet, dass** die mindestens zwei Teile (17, 18) mit ihren Außenabmessungen einen gemeinsamen Zylindermantel beschreiben.

12. Sanitäres Einsetzteil (1) nach einem der vorangehenden Ansprüche, **dadurch gekennzeichnet, dass** an einer Abströmseite (20) eine zumindest teilweise axial wirkende Dichtfläche (22) ausgebildet ist.

13. Sanitäres Einsetzteil (1) nach einem der vorangehenden Ansprüche, dass der oder ein Außendurchmesser (11) der Außenfläche (3) 8mm, vorzugsweise höchstens 6mm, beträgt.

14. Verwendung eines sanitären Einsetzteils nach Anspruch 1, wobei das Einsetzteil (1) in einen rohrförmigen Abschnitt (23) eingesetzt wird, wobei eine Innenwand (24) des rohrförmigen Abschnitt (23) als radial äußerer Abschluss der Aufnahme (9) des Regelkörpers (4) dient.

15. Verwendung nach dem vorangehenden Anspruch, wobei das sanitäre Einsetzteil (1) nach Anspruch 12 ausgeführt ist, **dadurch gekennzeichnet, dass** die oder eine zumindest teilweise axial wirkende Dichtfläche (22) zwischen dem Einsetzteil (1) und dem rohrförmigen Abschnitt (23) abströmseitig zu der Aufnahme (9) abdichtet, insbesondere wobei die Dichtfläche (22) an einem radial nach innen abstehenden Kragen (25) an dem rohrförmigen Abschnitt (23) anliegt.

## Claims

1. Sanitary insert part (1), having a main body (2) which provides a radially oriented outer surface (3) of the sanitary insert part (1), and an elastic regulating body (4), wherein the main body (2) forms a regulator core (5) with a regulating profile (6), and a regulating gap (7) is formed between the regulating body (4) and the regulating profile (6) such that an opening cross section (8) of the regulating gap (7) can be varied by a pressure-dependent loading of the regulating body (4), **characterized in that** the main body (2) forms a radially outwardly open receptacle (9), **in that** the regulating body (4) is arranged in the receptacle (9), and **in that** an outer diameter (10) of the regulating body (2) is matched to an outer diameter (11) of the outer surface (3), **in that** a sealing element (15) which is deformable radially inward is formed adjacent to the outer surface (3) .

2. Sanitary insert part (1) according to Claim 1, **characterized in that** the outer diameter (10) of the regulating body (4) is smaller, in particular at most 20%, preferably at most 10% smaller, than the outer diameter (11) of the outer surface (3).

3. Sanitary insert part (1) according to either of the preceding claims, **characterized in that** the receptacle (9) is designed to be radially outwardly open in an axial portion (12) taken up by the regulating body (4).

4. Sanitary insert part (1) according to one of the preceding claims, **characterized in that** the outer surface (3) is formed on a wall (13) of the main body (2), wherein the outer diameter (10) of the regulating body (4) is larger than an inner diameter (14) of the wall.

5. Sanitary insert part (1) according to one of the preceding claims, **characterized in that** the outer diameter (11) of the outer surface (3) defines a maximum radial outer dimension of the main body (2) .

6. Sanitary insert part (1) according to one of the preceding claims, **characterized in that** a sealing element (15) which is deformable radially inward, at least as far as the outer diameter (11) of the outer surface (3), is formed adjacent to the outer surface (3), in particular as an integrally formed sealing lip (16).

7. Sanitary insert part (1) according to one of the preceding claims, **characterized in that** the cross section of the main body (2) has a round main shape.

8. Sanitary insert part (1) according to one of the preceding claims, **characterized in that** the regulating body (4) is formed annularly, in particular as an O ring.

9. Sanitary insert part (1) according to one of the preceding claims, **characterized in that** the main body (2) is assembled from at least two parts (17, 18), in particular wherein the at least two parts (17, 18) are connected to one another in a form-fitting, force-fitting and/or integrally bonded manner and/or so as not to be releasable without being destroyed, and/or **in that** the main body (2) is formed integrally, in particular wherein the receptacle (9) is designed to be at least partially open axially on the end side.

10. Sanitary insert part (1) according to Claim 9, **characterized in that** a connecting portion (19) between the at least two parts (17, 18) reaches through the regulating body (5).

11. Sanitary insert part (1) according to Claim 9 or 10, **characterized in that** the at least two parts (17, 18) with their outer dimensions describe a common cylinder surface.

12. Sanitary insert part (1) according to one of the preceding claims, **characterized in that** an at least partially axially acting sealing surface (22) is formed on an outflow side (20).

13. Sanitary insert part (1) according to one of the preceding claims, in that the or an outer diameter (11) of the outer surface (3) is 8 mm, preferably at most 6 mm.

14. Use of a sanitary insert part according to Claim 1, wherein the insert part (1) is inserted into a tubular portion (23), wherein an inner wall (24) of the tubular portion (23) serves as a radially outer closure of the receptacle (9) of the regulating body (4).

15. Use according to the preceding claim, wherein the sanitary insert part (1) is embodied according to Claim 12, **characterized in that** the or an at least partially axially acting sealing surface (22) between the insert part (1) and the tubular portion (23) provides a seal on the outflow side with respect to the receptacle (9), in particular wherein the sealing surface (22) lies against a radially inwardly protruding collar (25) on the tubular portion (23).

## Revendications

1. Insert sanitaire (1) comprenant un corps de base (2), qui présente une face extérieure (3) de l'insert sanitaire (1) orientée radialement, et comprenant un corps de réglage élastique (4), dans lequel le corps de base (2) forme un noyau de régulateur (5) avec un profil de réglage (6), et une fente de réglage (7) est formée entre le corps de réglage (4) et le profil de réglage (6), de telle manière qu'une section transversale d'ouverture (8) de la fente de réglage (7) soit variable par une application du corps de réglage (4) en fonction de la pression, **caractérisé en ce que** le corps de base (2) forme un logement (9) ouvert radialement vers l'extérieur, **en ce que** le corps de réglage (4) est disposé dans le logement (9), **en ce qu'**un diamètre extérieur (10) du corps de réglage (2) est accordé à un diamètre extérieur (11) de la face extérieure (3), et **en ce qu'**un élément d'étanchéité (15) déformable radialement vers l'intérieur est formé à proximité de la face extérieure (3).

2. Insert sanitaire (1) selon la revendication 1, **caractérisé en ce que** le diamètre extérieur (10) du corps de réglage (4) est plus petit, en particulier est plus petit au maximum de 20 %, de préférence au maximum de 10 %, que le diamètre extérieur (11) de la face extérieure (3).

3. Insert sanitaire (1) selon l'une quelconque des revendications précédentes, **caractérisé en ce que** le logement (9) est réalisé sous forme ouverte radialement vers l'extérieur dans une partie axiale (12) occupée par le corps de réglage (4).

4. Insert sanitaire (1) selon l'une quelconque des revendications précédentes, **caractérisé en ce que** la face extérieure (3) est formée sur une paroi (13) du corps de base (2), dans lequel le diamètre extérieur (10) du corps de réglage (4) est plus grand qu'un diamètre intérieur (14) de la paroi.

5. Insert sanitaire (1) selon l'une quelconque des revendications précédentes, **caractérisé en ce que** le diamètre extérieur (11) de la face extérieure (3) définit une dimension radiale extérieure maximale du corps de base (2).

6. Insert sanitaire (1) selon l'une quelconque des revendications précédentes, **caractérisé en ce qu'**un élément d'étanchéité (15), déformable radialement vers l'intérieur, au moins jusqu'au diamètre extérieur (11) de la face extérieure (3), en particulier sous forme de lèvre d'étanchéité moulée (16), est formé à proximité de la face extérieure (3).

7. Insert sanitaire (1) selon l'une quelconque des revendications précédentes, **caractérisé en ce que** la section transversale du corps de base (2) présente une forme de base ronde.

8. Insert sanitaire (1) selon l'une quelconque des revendications précédentes, **caractérisé en ce que** le corps de réglage (4) est de forme annulaire, en particulier en forme de joint torique.

9. Insert sanitaire (1) selon l'une quelconque des revendications précédentes, **caractérisé en ce que** le corps de base (2) se compose d'au moins deux parties (17, 18), en particulier dans lequel lesdites au moins deux parties (17, 18) sont assemblées l'une à l'autre par complémentarité de forme, de force et/ou de matière, et/ou ne sont pas séparables sans destruction, et/ou **en ce que** le corps de base (2) est réalisé en une seule pièce, en particulier dans lequel le logement (9) est réalisé sous une forme au moins partiellement ouverte axialement d'un côté.

10. Insert sanitaire (1) selon la revendication 9, **caractérisé en ce qu'**une partie de liaison (19) entre lesdites au moins deux parties (17, 18) traverse le corps de réglage (5).

11. Insert sanitaire (1) selon la revendication 9 ou 10, **caractérisé en ce que** lesdites au moins deux parties (17, 18) décrivent par leurs dimensions extérieures une surface extérieure cylindrique commune.

12. Insert sanitaire (1) selon l'une quelconque des revendications précédentes, **caractérisé en ce qu'**une face d'étanchéité (22) agissant au moins en partie axialement est formée sur un côté aval (20).

13. Insert sanitaire (1) selon l'une quelconque des revendications précédentes, **caractérisé en ce que** le ou un diamètre extérieur (11) de la face extérieure (3) est de préférence égal au maximum à 6 mm.

14. Utilisation d'un insert sanitaire selon la revendication 1, dans laquelle on insère l'insert (1) dans une partie tubulaire (23), dans laquelle une paroi intérieure (24) de la partie tubulaire (23) sert de terminaison radialement extérieure du logement (9) du corps de réglage (4).

15. Utilisation selon la revendication précédente, dans laquelle l'insert sanitaire (1) est réalisé selon la revendication 12, **caractérisée en ce que** la ou une face d'étanchéité (22) agissant au moins en partie axialement réalise l'étanchéité côté aval entre l'insert (1) et la partie tubulaire (23) par rapport au logement (9), en particulier dans laquelle la face d'étanchéité (22) s'applique sur la partie tubulaire (23) sur un collet (25) saillant radialement vers l'intérieur.
